# EUROPÄISCHE PATENTANMELDUNG

(11) **EP 2 514 541 A2**
(43) Veröffentlichungstag der Anmeldung: **24.10.2012**
(21) Anmeldenummer: 12154456.3
(22) Anmeldetag: 08.02.2012
(51) Int. Cl.: B22F 3/00, B22F 3/03

(54) **Vorrichtung und Verfahren zum Herstellen eines Grünlings aus einem pulver- oder granulatförmigen Werkstoff**

(30) Priorität: 20.04.2011 DE 102011007728
(71) Anmelder: HILTI Aktiengesellschaft, 9494 Schaan (LI)
(72) Erfinder: Zoller, Ansgar, 6811 Göfis (AT); Gruhl, Michael, 9496 Balzers (LI); Toldo, Cliff, 9495 Triesen (LI)

(57) **Zusammenfassung**

Vorrichtung (1) und Verfahren zum Herstellen eines Grünlings aus einem pulver- oder granulatförmigen Werkstoff (14, 15) durch schichtweise Auftragen und Verdichten des Werkstoffes (14, 15) bestehend aus einem Füllschuh (5), der mit dem Werkstoff (14, 15) gefüllt ist und mittels einer Verstelleinrichtung (11) verstellbar ausgebildet ist, wobei eine erste Parkposition (31) für den Füllschuh (5) vorgesehen ist, einer Matrize (4) mit mindestens einer Aufbaukammer (9A, 9B), die vom Füllschuh (5) zwischen einer ersten und zweiten Endposition (32, 33) schichtweise mit dem Werkstoff (14, 15) gefüllt wird, und einer Presse (6) mit einem Unterstempel (7) und einem Oberstempel (8), die mittels einer Höhenverstelleinrichtung (22, 23) verstellbar sind und den schichtweise aufgetragenen Werkstoff (14, 15) in der mindestens einen Aufbaukammer (9A, 9B) verdichten. Der Füllschuh (5) wird nach dem Füllen der Aufbaukammer (9A, 9B) mit dem Werkstoff (14, 15) aus der zweiten Endposition (33) in eine zweite Parkposition (34) bewegt, wobei die zweite Parkposition (34) von der ersten Parkposition (31) verschieden ist.

## Beschreibung

Die vorliegende Erfindung betrifft eine Vorrichtung zum Herstellen eines Grünlings aus einem pulver- oder granulatförmigen Werkstoff gemäß dem Oberbegriff des Anspruchs 1 sowie ein Verfahren zum Herstellen eines Grünlings aus einem pulver- oder granulatförmigen Werkstoff gemäß dem Oberbegriff des Anspruchs 6.

Bekannte Bearbeitungswerkzeuge, wie Bohrkronen und Kreissägeblätter, bestehen aus einem Hauptkörper, der mit Schneidsegmenten verbunden ist. Die Schneidsegmente werden beispielsweise durch Laserschweißen mit dem Hauptkörper verbunden und bestehen aus einer Fußzone und einer Nutzzone. Als Fußzone wird der Bereich des Schneidsegmentes bezeichnet, der mit dem Hauptkörper des Bearbeitungswerkzeuges verbunden ist, und als Nutzzone das übrige Schneidsegment. Die Fußzone besteht beispielsweise aus einem schweißbaren Werkstoff, um den Hauptkörper und die Schneidsegmente gut verschweißen zu können. Die Nutzzone besteht aus einem Grundmaterial und Schneidpartikeln, die in das Grundmaterial eingebettet sind. Die Schneidpartikel sind als Diamantpartikel oder sonstige abrasive Partikel, die sich zur abtragenden Bearbeitung eignen, ausgebildet. Die Schneidwirkung erfolgt durch die Schneidpartikel, das Grundmaterial dient zur Fixierung der Schneidpartikel.

Die Schneidsegmente werden in einem zweistufigen Verfahren aus pulver- oder granulatförmigen Werkstoffen hergestellt: In einer ersten Stufe wird ein Grünling aus übereinander liegenden Werkstoffschichten aufgebaut und in einer zweiten Stufe wird der Grünling in einer Sinteranlage durch Temperatur- und/oder Druckeinwirkung fertig gestellt. Bei einer ersten Gruppe von Herstellungsverfahren werden die Schneidpartikel in das Grundmaterial gemischt und gleichmäßig im Grundmaterial verteilt. Nachteilig ist, dass sich Schneidpartikelnester bilden können, die die Schneidleistung und die Lebensdauer der Schneidsegmente reduzieren. Bei einer zweiten Gruppe von Herstellungsverfahren wird das Grundmaterial schichtweise mit einem Füllschuh aufgetragen und die Schneidpartikel werden in einem separaten Setzschritt von einer Setzeinheit in das Grundmaterial gesetzt. Durch den separaten Setzschritt können die Konzentration und Verteilung der Schneidpartikel in der Werkstoffschicht variiert und an die Bearbeitungsaufgabe angepasst werden.

Bekannte Vorrichtungen zum Herstellen eines Grünlings aus einem pulver- oder granulatförmigen Werkstoff durch aufeinanderfolgendes Auftragen und Verdichten des Werkstoffes bestehen aus einem Füllschuh, der mit dem Werkstoff bzw. mehreren Werkstoffen gefüllt ist und mittels einer Verstelleinrichtung verstellbar ausgebildet ist, einer Matrize mit mindestens einer Aufbaukammer, die der Füllschuh schichtweise mit dem Werkstoff füllt, und einer Presse mit einem Unterstempel und einem Oberstempel, die mittels einer Höhenverstelleinrichtung verstellbar sind und den schichtweise aufgetragenen Werkstoff in der Aufbaukammer verdichten. Für den Füllschuh ist eine erste Parkposition vorgesehen, in der der Füllschuh während des Pressvorgangs angeordnet ist. Zum Befüllen der Aufbaukammer mit Werkstoff wird der Füllschuh aus der Parkposition in eine Endposition bewegt, in der der Füllschuh geöffnet und Werkstoff in die Aufbaukammer gefüllt wird. Am Ende des Füllvorgangs wird der Füllschuh verschlossen. Diese Position wird als zweite Endposition für den Füllschuh bezeichnet. Der Füllschuh wird nach dem Füllvorgang aus der zweiten Endposition über die erste Endposition in die Parkposition zurückbewegt.

Bei der Hinbewegung des Füllschuhs zwischen der ersten und zweiten Endposition und bei der Rückbewegung zwischen der zweiten und ersten Endposition kommt es am Rand der Aufbaukammer zu einer einseitigen Verdichtung des Werkstoffes. Die einseitige Verdichtung des Werkstoffes führt zu Unregelmäßigkeiten in der Werkstoffdichte. Diese Unregelmäßigkeiten können die Schneidleistung und die Lebensdauer der Schneidsegmente reduzieren.

Um das Problem der einseitigen Verdichtung beim Füllvorgang zu reduzieren, ist bekannt, die Matrize und/oder den Füllschuh durch Rüttelbewegungen oder Schwingungen während des Füllvorgangs in Vibration zu versetzen. Die Rüttelbewegungen oder Schwingungen führen zu einer gleichmäßigen Verteilung des Werkstoffes in der Aufbaukammer. Problematisch ist jedoch, dass die Schneidpartikel ebenfalls gleichmäßig in der Werkstoffschicht verteilt werden und sich nicht mehr an der von der Setzeinheit im Setzschritt vorgegebenen Position befinden.

Alternativ kann der Füllschuh in verschiedenen Bewegungsrichtungen über die Matrize bzw. über die Aufbaukammern bewegt werden, um einseitige Verdichtung zu reduzieren. Problematisch bei dieser Lösung ist, dass durch die Bewegungen die Komplexität der Maschine zunimmt und zusätzliche Maschinenkomponenten erforderlich sind.

Die Aufgabe der vorliegenden Erfindung besteht darin, eine Vorrichtung und ein Verfahren zum Herstellen eines Grünlings aus einem pulver- oder granulatförmigen Werkstoff durch schichtweise Auftragen und Verdichten des Werkstoffes dahingehend weiterzuentwickeln, dass die Schneidsegmente ohne zusätzliche Maschinenkomponenten eine gleichmäßige Werkstoffdichte aufweisen. Außerdem soll die notwendige Zeit zum Aufbau der Grünlinge reduziert werden.

Diese Aufgabe wird bei der eingangs genannten Vorrichtung zum Herstellen eines Grünlings aus einem pulver- oder granulatförmigen Werkstoff erfindungsgemäß durch die Merkmale des unabhängigen Anspruchs 1 und bei dem eingangs genannten Verfahren zum Herstellen eines Grünlings aus einem pulver- oder granulatförmigen Werkstoff erfindungsgemäß durch die Merkmale des unabhängigen Anspruchs 6 gelöst. Vorteilhafte Weiterbildungen sind in den abhängigen Ansprüchen angegeben.

Bei der eingangs genannten Vorrichtung ist erfindungsgemäß vorgesehen, dass eine zweite Parkposition für den Füllschuh vorgesehen ist, wobei die zweite Parkposition von der ersten Parkposition verschieden ist. Dadurch, dass eine zweite Parkposition für den Füllschuh vorgesehen ist, kann die Bewegungsrichtung des Füllschuhs nach dem Füllvorgang beibehalten werden. Der Füllschuh muss nicht erst abgebremst und dann in entgegen gesetzter Bewegungsrichtung beschleunigt werden. Würde der Füllschuh nach dem Füllvorgang in seine Parkposition zurückbewegt, müsste der Weg über die Matrize zusätzlich zurückgelegt werden. Außerdem kann die Bewegungsrichtung, in der der Werkstoff aufgetragen wird, in aufeinanderfolgenden Werkstoffschichten umgekehrt werden, ohne dass ein zweiter Füllschuh erforderlich ist.

In einer bevorzugten Ausführungsform ist der Füllschuh in der ersten und/oder zweiten Parkposition mit einer Füllstation, die den Füllschuh mit Werkstoff befüllt, verbindbar. Die Nebenzeit, in der der Füllschuh in einer Parkposition angeordnet ist, wird dazu genutzt, den Füllschuh mit Werkstoff zu befüllen. Durch die Füllstation kann der Füllschuh kleiner ausgebildet sein, da der Füllschuh regelmäßig mit Werkstoff aufgefüllt werden kann. Wenn keine Füllstation für den Füllschuh vorgesehen ist, muss der Füllschuh mit einer großen Menge an Werkstoff gefüllt oder über Zuführleitungen mit einem Vorratsbehälter verbunden sein. Durch die Bewegung des Füllschuhs kann es zu einem Abklemmen der Zuführleitungen kommen, so dass die Werkstoffzufuhr gestört oder unterbrochen wird.

Besonders bevorzugt ist der Füllschuh in der ersten Parkposition mit einer ersten Füllstation und in der zweiten Parkposition mit einer zweiten Füllstation verbindbar. Durch die zweite Füllstation kann die Nebenzeit, in der der Füllschuh in einer Parkposition angeordnet ist, besser ausgenutzt werden.

In einer ersten bevorzugten Variante sind ein erster Werkstoff an der ersten Füllstation und ein zweiter Werkstoff an der zweiten Füllstation auffüllbar. Dadurch, dass an jeder Füllstation nur ein Werkstoff aufgefüllt wird, ist das Füllsystem konstruktiv einfacher gestaltet. Jede Füllstation muss nur über eine Zuführleitung mit dem Vorratsbehälter verbunden werden.

In einer zweiten bevorzugten Variante sind ein erster und zweiter Werkstoff an der ersten und zweiten Füllstation auffüllbar. Je weniger Werkstoff im Füllschuh vorhanden sein muss, umso kleiner und damit kompakter kann der Füllschuh ausgebildet sein. Wenn an beiden Füllstationen alle Werkstoffe aufgefüllt werden können, ist es ausreichend, wenn der Füllschuh Werkstoff zum Auftragen einer Werkstoffschicht enthält.

Bevorzugt ist die Geschwindigkeit des Füllschuhs über die Verstelleinrichtung einstellbar. Die Einstellbarkeit der Geschwindigkeit, mit der der Füllschuh bewegt wird, kann dazu genutzt werden, die Geschwindigkeit beim Positionieren des Füllschuhs gegenüber einer konstanten Vorschubgeschwindigkeit zwischen der ersten und zweiten Endposition des Füllvorgangs zu erhöhen. Höhere Geschwindigkeiten beim Positionieren können die Nebenzeiten beim Aufbau der Grünlinge reduzieren.

Dabei ist die Verstelleinrichtung des Füllschuhs besonders bevorzugt als Elektromotor ausgebildet. Die Geschwindigkeit, mit der der Füllschuh über die Arbeitsplatte bewegt wird, ist über eine Steuereinrichtung verstellbar. Um die Nebenzeiten beim Aufbau der Grünlinge zu reduzieren, wird der Füllschuh mit einer höheren Geschwindigkeit als beim Füllvorgang aus einer Parkposition in eine Endposition bzw. aus einer Endposition in eine Parkposition bewegt. Die Vorschubgeschwindigkeit beim Füllvorgang hängt vor allem vom Füllverhalten des Werkstoffes ab.

Bei dem eingangs genannten Verfahren ist erfindungsgemäß vorgesehen, dass der Füllschuh nach dem Auftragen des Werkstoffes aus der zweiten Endposition in eine zweite Parkposition bewegt wird, wobei die zweite Parkposition von der ersten Parkposition verschieden ist. Dadurch, dass der Füllschuh nach dem Füllvorgang in die zweite Parkposition bewegt wird, ist der Positionierweg des Füllschuhs reduziert. Würde der Füllschuh nach dem Füllvorgang in seine Parkposition zurückbewegt, müsste der Weg über die Matrize zusätzlich zurückgelegt werden.

Bevorzugt wird der Werkstoff in einer Werkstoffschicht in einer ersten Bewegungsrichtung und in einer folgenden weiteren Werkstoffschicht in einer zweiten Bewegungsrichtung aufgetragen, wobei die erste und zweite Bewegungsrichtung einander entgegen gerichtet sind. Durch die Vorschubbewegung entsteht beim Füllvorgang im Endbereich der Werkstoffschicht eine Verdichtungszone mit erhöhter Werkstoffdichte. Dadurch, dass die Bewegungsrichtung nach jeder Werkstoffschicht umgedreht wird, addieren sich die Fehler nicht, sondern wirken einander entgegen.

Bevorzugt wird die Geschwindigkeit, mit der der Füllschuh zwischen der Parkposition und der Endposition bewegt wird, gegenüber einer konstanten Geschwindigkeit des Füllschuhs zwischen den Endpositionen zumindest abschnittsweise erhöht. Höhere Geschwindigkeiten beim Positionieren des Füllschuhs können die Nebenzeiten beim Aufbau der Grünlinge und somit die notwendige Zeit zum Aufbau der Grünlinge reduzieren.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- Fig. 1: eine erfindungsgemäße Vorrichtung zum Herstellen eines Grünlings aus einem pulver- oder granulatförmigen Werkstoff durch aufeinanderfolgendes Auftragen des Werkstoffes mit einem Füllschuh und Verdichten des Werkstoffes mit einer Presse;
- Fig. 2: die Presse der Fig. 1 in einer Seitenansicht mit einem Unterstempel und einem Oberstempel, die höhenverstellbar ausgebildet sind und in einer Pressrichtung gegeneinander gepresst werden; und
- Fig. 3: den Füllschuh der Fig. 1 in einer Ansicht von oben, wobei der Füllschuh zwischen einer ersten Parkposition und einer zweiten Parkposition verstellbar ist.

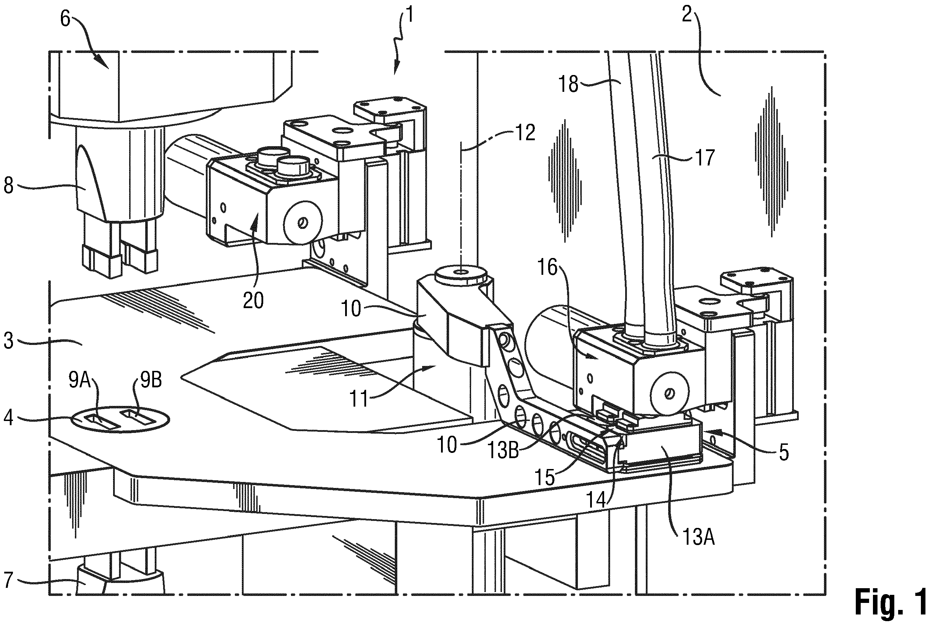

**Fig. 1** zeigt eine erfindungsgemäße Vorrichtung **1** zum Herstellen eines Grünlings aus einem pulver- oder granulatförmigen Werkstoff durch aufeinanderfolgendes Auftragen und Verdichten des Werkstoffes. Die Vorrichtung 1 umfasst einen Maschinenrahmen **2**, eine horizontal angeordnete Arbeitsplatte **3** mit einer Matrize **4**, einen Füllschuh **5** und eine Presse **6** mit einem Unterstempel **7** und einem Oberstempel **8**.

Die Matrize 4 ist austauschbar in der Arbeitsplatte 3 angeordnet und umfasst eine erste Aufbaukammer **9A** für einen ersten Grünling und eine zweite Aufbaukammer **9B** für einen zweiten Grünling. Die Aufbaukammern 9A, 9B sind als Durchgangsöffnungen in der Matrize 4 ausgebildet, in die der Unterstempel 7 und der Oberstempel 8 eingreifen können. Die Aufbaukammern 9A, 9B werden während des Aufbaus der Grünlinge schichtweise mit dem Werkstoff gefüllt. Die Geometrie der Aufbaukammern 9A, 9B entspricht der gewünschten Geometrie der Schneidsegmente, wobei Schwindungseffekte beim Sintern der Grünlinge zu berücksichtigen sind. Die in Fig. 1 gezeigten Aufbaukammern 9A, 9B sind identisch ausgebildet, so dass identische Schneidsegmente hergestellt werden. Alternativ können die Aufbaukammern auch unterschiedlich gestaltet sein.

Der Füllschuh 5 zum Auftragen des Werkstoffes in die Aufbaukammern 9A, 9B ist oberhalb der Arbeitsplatte 3 angeordnet. Der Füllschuh 5 ist an einem Haltearm **10** befestigt und mittels einer Verstelleinrichtung **11** auf der Oberseite der Arbeitsplatte 3 verstellbar. Die Verstelleinrichtung 11 ist als Schwenkeinrichtung ausgebildet, die den Füllschuh 5 um eine Schwenkachse **12** bewegt. Alternativ kann die Verstelleinrichtung als Linearantrieb oder als kombinierte Antriebseinheit ausgebildet sein.

Der Grünling wird aus pulver- oder granulatförmigen Werkstoff in mehreren Schichten aufgebaut. Dabei kann der Grünling aus dem gleichen Werkstoff oder aus verschiedenen Werkstoffen aufgebaut werden. Beispielsweise kann die Fußzone eines Schneidsegmentes, d.h. der Bereich des Schneidsegmentes, der mit dem Hauptkörper verbunden wird, aus einem schweißbaren Werkstoff aufgebaut sein, um das Schneidsegment und den Hauptkörper gut verschweißen zu können. Das übrige Schneidsegment besteht aus einem Verschleißwerkstoff, in den die Schneidpartikel eingebettet sind.

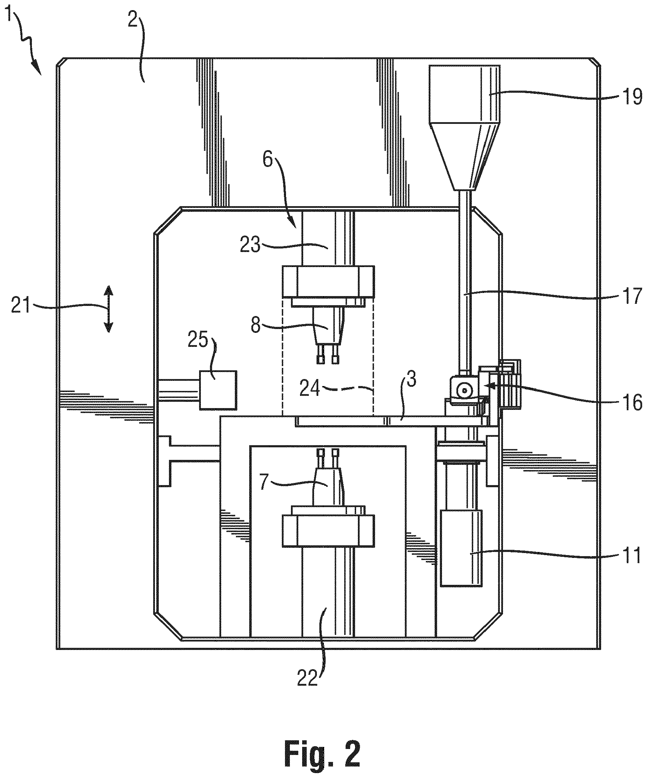

Der Füllschuh 5 umfasst einen ersten Füllbehälter **13A** zum Füllen der ersten Aufbaukammer 9A und einen zweiten Füllbehälter **13B** zum Füllen der zweiten Aufbaukammer 9B. Die Füllbehälter 13A, 13B weisen jeweils zwei Werkstoffkammern auf, eine erste Werkstoffkammer für einen ersten Werkstoff **14** und eine zweite Werkstoffkammer für einen zweiten Werkstoff **15**. Die Größe der Werkstoffkammern ist so gewählt, dass die Werkstoffkammern genügend Werkstoff 14, 15 für eine vorbestimmte Anzahl an Werkstoffschichten aufnehmen können. Die Füllbehälter 13A, 13B werden an einer Füllstation **16** mit dem ersten und zweiten Werkstoff 14, 15 befüllt. Die Füllstation 16 ist über eine erste Zuführleitung **17** für den ersten Werkstoff 14 und über eine zweite Zuführleitung **18** für den zweiten Werkstoff 15 mit einem Vorratsbehälter **19** (Fig. 2) verbunden. Alternativ können die Füllbehälter 13A, 13B über Zuführleitungen direkt mit dem Vorratsbehälter 19 verbunden werden.

Die Vorrichtung 1 weist neben der Füllstation 16 eine weitere Füllstation **20** auf. In der in Fig. 1 gezeigten Ausführung sind die Füllstationen 16, 20 identisch aufgebaut. Die Füllstation 20 ist über Zuführleitungen mit einem Vorratsbehälter, der den ersten und zweiten Werkstoff 14, 15 bevorratet, verbunden. Alternativ kann die erste Füllstation 16 die erste Werkstoffkammer der Füllbehälter 13A, 13B mit dem ersten Werkstoff 14 und die zweite Füllstation 20 die zweite Werkstoffkammer der Füllbehälter 13A, 13B mit dem zweiten Werkstoff 15 befüllen.

**Fig. 2** zeigt die Presse 6 der Fig. 1 in einer Seitenansicht mit dem Unterstempel 7 und dem Oberstempel 8. Der Unterstempel 7 ist unterhalb der Arbeitsplatte 3 angeordnet und mit dem Maschinenrahmen 2 verbunden. Der Oberstempel 8 ist oberhalb der Arbeitsplatte 3 angeordnet und ebenfalls mit dem Maschinenrahmen 2 verbunden.

Der Unterstempel 7 und der Oberstempel 8 werden in einer Pressrichtung **21** gegeneinander gepresst, um den Grünling zu verdichten. Beim Verdichten werden die Schneidpartikel in der Werkstoffschicht temporär fixiert und ein Verschieben der Schneidpartikel in der Werkstoffschicht wird verhindert. Der Unterstempel 7 ist mit einer Höhenverstelleinrichtung **22** in der Pressrichtung 21 motorisch verstellbar und greift an der Unterseite der Matrize 4 in die Aufbaukammern 9A, 9B ein. Der Oberstempel 8 ist mit einer Höhenverstelleinrichtung **23** in der Pressrichtung 21 motorisch verstellbar und wirkt an der Oberseite der Matrize 4 auf den Grünling ein. Als Presszone **24** wird der Bereich zwischen dem Unterstempel 7 und dem Oberstempel 8 bezeichnet.

Zum Aufbau der Grünlinge sind verschiedene Bearbeitungseinheiten erforderlich, deren Bewegungen zeitlich und räumlich koordiniert werden müssen. Der pulver- oder granulatförmige Werkstoff 14, 15 wird in einem ersten Verfahrensabschnitt mit dem Füllschuh 5 schichtweise in die Aufbaukammern 9A, 9B gefüllt, die Schneidpartikel werden in einem zweiten Verfahrensabschnitt mit einer Setzeinheit **25** in die Werkstoffschicht gesetzt und in einem dritten Verfahrensabschnitt erfolgt das Verdichten des Grünlings mit der Presse 6. Um eine Kollision der Bearbeitungseinheiten 5, 6, 25 zu verhindern, müssen die nicht-aktiven Bearbeitungseinheiten aus der Bearbeitungszone der jeweils aktiven Bearbeitungseinheit entfernt werden. Der Füllschuh 5 wird nach dem Füllvorgang in eine Position verfahren, die außerhalb der Presszone 24 liegt. Aufgrund der hohen Presskräfte, die der Oberstempel 8 beim Verdichten aufbringen muss, sind der Oberstempel 8 massiv und die Presszone 24 entsprechend groß ausgebildet.

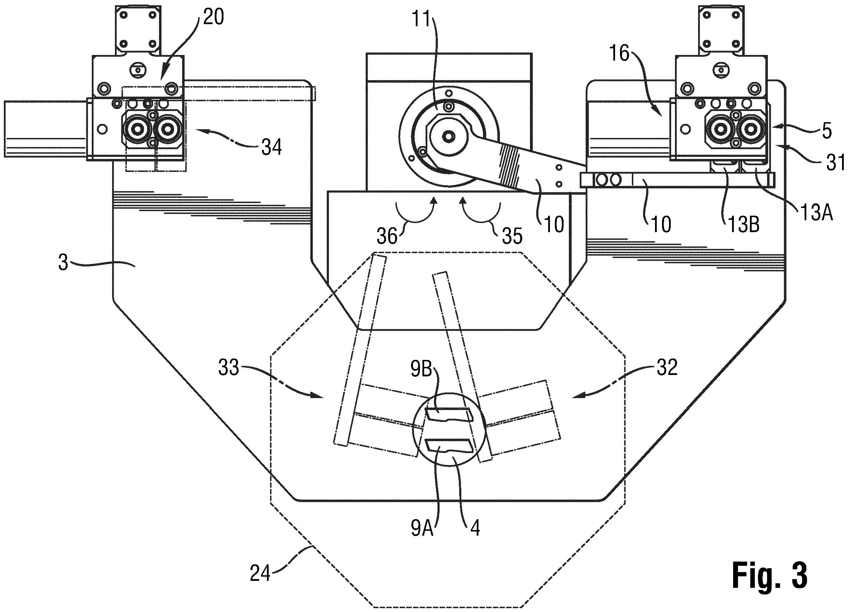

**Fig. 3** zeigt den Füllschuh 5 in einer Ansicht von oben auf die Arbeitsplatte 3, wobei der Oberstempel 8 der Presse 6 nicht abgebildet ist. Der Füllschuh 5 ist in einer Position angeordnet, die außerhalb der Presszone 24 liegt und als erste Parkposition **31** bezeichnet wird. In der ersten Parkposition 31 ist der Füllschuh 5 mit der ersten Füllstation 16 verbunden und die Füllbehälter 13A, 13B des Füllschuhs 5 können mit dem ersten und zweiten Werkstoff 14, 15 aufgefüllt werden.

Zum Befüllen der Aufbaukammern 9A, 9B mit den Werkstoffen 14, 15 wird der Füllschuh 5 aus der ersten Parkposition 31 in eine erste Endposition **32** bewegt. In der ersten Endposition 32 werden die Füllbehälter 13A, 13B des Füllschuhs 5 geöffnet und der Füllvorgang beginnt. Der Füllschuh 5 wird über die Aufbaukammern 9A, 9B, die über die Füllbehälter 13A, 13B mit den Werkstoffen 14, 15 gefüllt werden, bis zu einer zweiten Endposition **33** bewegt. In der zweiten Endposition 33 werden die Füllbehälter 13A, 13B des Füllschuhs 5 verschlossen und der Füllvorgang ist beendet. Der Füllschuh 5 wird aus der zweiten Endposition 33 in eine zweite Parkposition **34** bewegt. Die zweite Parkposition 34 liegt wie die erste Parkposition 31 außerhalb der Presszone 24. Die verschiedenen Positionen 31-34 des Füllschuhs 5 sind in einer Steuereinrichtung voreingestellt oder werden von einer Sensoreinrichtung erfasst.

Die Bewegung des Füllschuhs 5 zwischen der ersten und zweiten Parkposition 31, 34 wird in eine Positionierbewegung und eine Füllbewegung unterteilt. Als Positionierbewegung werden Bewegungen bezeichnet, die zur Positionierung des Füllschuhs 5 vor und nach dem Befüllen der Aufbaukammern 9A, 9B erforderlich sind. Dabei werden eine Anstellbewegung und Rückstellbewegung unterschieden. Bei der Anstellbewegung wird der Füllschuh 5 aus einer Parkposition in eine Endposition, in der der Füllvorgang beginnt, bewegt. Bei der Rückstellbewegung wird der Füllschuh 5 aus einer Endposition, in der der Füllvorgang endet, in eine Parkposition bewegt.

Der Aufbau des Grünlings durch schichtweise Auftragen und Verdichten erfolgt gemäß dem folgenden erfindungsgemässen Verfahren zum Herstellen eines Grünlings aus einem pulver-oder granulatförmigen Werkstoff. Das Verfahren besteht aus mehreren Abschnitten, die iterativ wiederholt werden, bis der Grünling die gewünschte Höhe erreicht hat.

In einem ersten Abschnitt wird eine erste Werkstoffschicht aufgebaut. Der erste Abschnitt besteht aus mehreren Teilschritten: Der Unterstempel 7 wird mit Hilfe der Höhenverstelleinrichtung 22 um die gewünschte Schichtdicke der ersten Werkstoffschicht abgesenkt. Wenn sich bereits Werkstoffschichten in den Aufbaukammern 9A, 9B befinden, werden der Unter-und Oberstempel 7, 8 gemeinsam um die gewünschte Schichtdicke abgesenkt und der Oberstempel 8 wird anschließend in seine Ausgangsposition zurückbewegt. Der Füllschuh 5 wird in einer ersten Bewegungsrichtung **35** mit einer Anstellbewegung aus der ersten Parkposition 31 in die erste Endposition 32 bewegt. Anschließend wird der Füllschuh 5 über die Aufnahmekammern 9A, 9B, die während des Füllvorgangs mit den Werkstoffen 14, 15 gefüllt werden, bis zur zweiten Endposition 33 bewegt. Nach dem Füllvorgang wird der Füllschuh 5 mit einer Rückstellbewegung in der ersten Bewegungsrichtung 35 aus der zweiten Endposition 33 in die zweite Parkposition 34 bewegt. Anschließend setzt die Setzeinheit 25 die Schneidpartikel in der gewünschten Verteilung in die erste Werkstoffschicht. Der Setzschritt wird dann ausgeführt, wenn die Schneidpartikel nicht in den Werkstoff gemischt sind, sondern einzeln in die Werkstoffschicht gesetzt werden.

Nach dem Auffüllen der ersten Werkstoffschicht werden die Werkstoffe in einem zweiten Abschnitt verdichtet. Der Oberstempel 8 wird zunächst bis zur Oberkante der Aufbaukammern 9A, 9B abgesenkt. Anschließend werden der Unterstempel 7 und der Oberstempel 8 gegeneinander in Pressrichtung 21 gepresst, um die erste Werkstoffschicht zu verdichten. Nach dem Verdichten werden der Unterstempel 7 und der Oberstempel 8 gemeinsam in einer Hubbewegung um die gewünschte Schichtdicke der zweiten Werkstoffschicht abgesenkt. Abschließend wird der Oberstempel 8 in seine Ausgangsposition zurückbewegt.

In einem dritten Abschnitt wird eine zweite Werkstoffschicht aufgebaut. Der dritte Abschnitt besteht aus mehreren Teilschritten: Der Füllschuh 5 wird in einer zweiten Bewegungsrichtung **36** mit einer Anstellbewegung aus der zweiten Parkposition 34 in die zweite Endposition 33 bewegt. Anschließend wird der Füllschuh 5 zwischen der zweiten Endposition 33 und der ersten Endposition 32 über die Aufbaukammern 9A, 9B bewegt, die während des Füllvorgangs mit den Werkstoffen 14, 15 gefüllt werden. Nach dem Füllvorgang wird der Füllschuh 5 mit einer Rückstellbewegung in der zweiten Bewegungsrichtung 36 aus der ersten Endposition 32 in die erste Parkposition 31 bewegt. Anschließend setzt die Setzeinheit 25 die Schneidpartikel in der gewünschten Verteilung in die zweite Werkstoffschicht.

In einem vierten Abschnitt wird die zweite Werkstoffschicht mit Hilfe der verstellbaren Unter-und Oberstempel 7, 8 analog zum Verdichten der ersten Werkstoffschicht verdichtet.

Die Füllbewegung und die Positionierbewegungen des Füllschuhs 5 erfolgen beim Aufbau der zweiten Werkstoffschicht in die zweite Bewegungsrichtung 36, die zur ersten Bewegungsrichtung 35 beim Aufbau der ersten Werkstoffschicht entgegen gerichtet ist. Durch die Vorschubbewegung des Füllschuhs 5 entsteht beim Füllvorgang im Endbereich der Werkstoffschicht eine Verdichtungszone mit erhöhter Werkstoffdichte. Dadurch, dass die Bewegungsrichtung 35, 36 nach jeder Werkstoffschicht umgedreht wird, addieren sich die Fehler nicht, sondern wirken einander entgegen.

Die Vorschubgeschwindigkeit des Füllschuhs 5 ist bei der Füllbewegung zwischen den Endpositionen 32, 33 konstant, um einen gleichmäßigen Werkstoffauftrag einzustellen. Das Füllverhalten der Werkstoffe 14, 15 legt die maximal mögliche Vorschubgeschwindigkeit bei der Füllbewegung fest. Bei höheren Vorschubgeschwindigkeiten während der Füllbewegung besteht die Gefahr, dass die Aufbaukammern 9A, 9B nicht gleichmäßig und vor allem nicht mit der notwendigen Werkstoffmenge gefüllt werden.

Bei der Anstellbewegung und Rückstellbewegung des Füllschuhs 5 zwischen den Parkpositionen 31, 34 und Endpositionen 32, 33 wird die maximal mögliche Vorschubgeschwindigkeit des Füllschuhs durch die Leistungsfähigkeit der Verstelleinrichtung 11 bestimmt.

## Patentansprüche

1. Vorrichtung (1) zum Herstellen eines Grünlings aus einem pulver- oder granulatförmigen Werkstoff (14, 15) durch aufeinanderfolgendes Auftragen und Verdichten des Werkstoffes (14, 15), bestehend aus
einem Füllschuh (5), der mit dem Werkstoff (14, 15) gefüllt ist und mittels einer Verstelleinrichtung (11) verstellbar ausgebildet ist, wobei eine erste Parkposition (31) für den Füllschuh (5) vorgesehen ist,
einer Matrize (4) mit mindestens einer Aufbaukammer (9A, 9B), die der Füllschuh (5) schichtweise mit dem Werkstoff (14, 15) füllt, und
einer Presse (6) mit einem Unterstempel (7) und einem Oberstempel (8), die mittels einer Höhenverstelleinrichtung (22, 23) verstellbar sind und den schichtweise aufgetragenen Werkstoff (14, 15) in der mindestens einen Aufbaukammer (9A, 9B) verdichten,
**dadurch gekennzeichnet, dass**
eine zweite Parkposition (34) für den Füllschuh (5) vorgesehen ist, wobei die zweite Parkposition (34) von der ersten Parkposition (31) verschieden ist.

2. Vorrichtung nach Anspruch 1, **dadurch gekennzeichnet, dass** der Füllschuh (5) in der ersten und/oder zweiten Parkposition (31, 34) mit einer Füllstation (16, 20), die den Füllschuh (5) mit Werkstoff (14, 15) befüllt, verbindbar ist.

3. Vorrichtung nach Anspruch 2, **dadurch gekennzeichnet, dass** der Füllschuh (5) in der ersten Parkposition (31) mit einer ersten Füllstation (16) und in der zweiten Parkposition (34) mit einer zweiten Füllstation (20) verbindbar ist.

4. Vorrichtung nach einem der Ansprüche 1 bis 3, **dadurch gekennzeichnet, dass** die Geschwindigkeit des Füllschuhs (5) über die Verstelleinrichtung (11) einstellbar ist.

5. Vorrichtung nach Anspruch 4, **dadurch gekennzeichnet, dass** die Verstelleinrichtung (11) für den Füllschuh (5) als Elektromotor ausgebildet ist.

6. Verfahren zum Herstellen eines Grünlings aus einem pulver- oder granulatförmigen Werkstoff (14, 15) mit folgenden Verfahrensschritten:
ein Füllschuh (5), der mit dem Werkstoff (14, 15) gefüllt ist, wird mittels einer Verstelleinrichtung (11) aus einer Parkposition (31, 34) in eine Endposition (32, 33) bewegt, und
der Füllschuh (5) wird aus der Endposition (32, 33) in eine weitere Endposition (33, 32) bewegt, wobei der Füllschuh (5) zwischen den Endposition (32, 33) über mindestens eine Aufbaukammer (9A, 9B) bewegt wird und die Aufbaukammer (9A, 9B) schichtweise mit dem Werkstoff (14, 15) gefüllt wird,
**dadurch gekennzeichnet, dass**
der Füllschuh (5) nach dem Füllen der Aufbaukammer (9A, 9B) mit dem Werkstoff (14, 15) aus der Endposition (33, 32) in eine zweite Parkposition (34, 31) bewegt wird, wobei die zweite Parkposition (34, 31) von der ersten Parkposition (31, 34) verschieden ist.

7. Verfahren nach Anspruch 6, **dadurch gekennzeichnet, dass** der Werkstoff (14, 15) in einer Werkstoffschicht in einer ersten Bewegungsrichtung (35, 36) und in einer folgenden weiteren Werkstoffschicht in einer zweiten Bewegungsrichtung (36, 35) aufgetragen wird, wobei die erste und zweite Bewegungsrichtung (35, 36) einander entgegen gerichtet sind.

8. Verfahren nach einem der Ansprüche 6 bis 7, **dadurch gekennzeichnet, dass** die Geschwindigkeit, mit der der Füllschuh (5) zwischen der Parkposition (31, 34) und der Endposition (32, 33) bewegt wird, gegenüber einer Geschwindigkeit des Füllschuhs (5) zwischen den Endpositionen (32, 33) zumindest abschnittsweise erhöht wird.
